# EUROPÄISCHE PATENTSCHRIFT

(11) **EP 0 610 833 B1**
(45) Veröffentlichungstag und Bekanntmachung des Hinweises auf die Patenterteilung: **01.10.1997**
(21) Anmeldenummer: 94101749.3
(22) Anmeldetag: 05.02.1994
(51) Int. Cl.: G01D 5/26

(54) **Teilungsträger**
Support for a measuring scale
Support pour une échelle de mesure

(30) Priorität: 11.02.1993 DE 4303975
(43) Veröffentlichungstag der Anmeldung: 17.08.1994
(73) Patentinhaber: Dr. Johannes Heidenhain GmbH, D-83292 Traunreut (DE)
(72) Erfinder: Michel, Dieter, Dipl.-Ing., D-83278 Traunstein (DE); Flatscher, Georg, Dr.Dipl.-Phys., D-83458 Schneizlreuth (DE)

(56) Entgegenhaltungen:
- DE-A- 2 615 473
- FR-A- 2 676 538
- US-A- 3 521 961
- TOOLING AND PRODUCTION, Bd.54, Nr.3, Juni 1988, SOLON US Seiten 49 - 51 ANONYMOUS 'GLASS SCALE TECHNOLOGY - AN EXERCISE IN PRECISION'

## Beschreibung

Die Erfindung betrifft einen Teilungsträger für im Auflicht arbeitende Längen- oder Winkelmeßsysteme.

Ein derartiger Teilungsträger wird bei einer lichtelektrischen Positionsmeßeinrichtung zur Messung der Relativlage zweier beweglicher Objekte als Maßverkörperung eingesetzt. Die relativ zueinander beweglichen Objekte können zwei Maschinenteile einer Werkzeugmaschine sein, bei der ein Werkzeug bezüglich eines zu bearbeitenden Werkstückes zu positionieren ist. Zu diesem Zweck ist das eine Maschinenteil mit dem Teilungsträger verbunden, dessen Teilung von einer am anderen Maschinenteil angebrachten Abtasteinheit abgetastet wird.

Als Material für den Grundkörper des Teilungsträgers wird bevorzugt Glas verwendet.

Bei im Auflicht eingesetzten Amplituden- und Phasengittern wird eine hochreflektierende durchgehende Schicht auf den Grundkörper aufgebracht. Es hat sich gezeigt, daß in dieser Schicht mechanische Spannungen auftreten, durch die der Grundkörper verformt wird. Bei Längen- oder Winkelmeßsystemen ist es erforderlich, daß bei der Abtastung über die gesamte Länge des Teilungsträgers ein konstanter Abstand zwischen dem Teilungsträger und der Abtasteinheit eingehalten wird. Wenn sich nun der Teilungsträger aufgrund von Spannungen der reflektierenden Schicht wölbt, verändert sich der Abtastabstand entlang des Teilungsträgers, wodurch Meßfehler auftreten.

Aus der US-A-3,521,961 ist ein Teilungsträger mit den Merkmalen des Oberbegriffes des Anspruches 1 bekannt. Auf einem Grundkörper ist ein Schichtenpaket aus mehreren durchgehenden Schichten aufgebracht. Dieses Schichtenpaket bildet die nichtreflektierenden Bereiche. Die reflektierenden Bereiche sind auf dieses Schichtenpaket aufgebracht. Dieser Aufbau ist aufwendig und nicht spannungsfrei.

In der DE-A-26 15 473 ist ein Meßwiderstand mit einer Platinwiderstandsschicht beschrieben, bei dem zwischen einem Träger und der Platinwiderstandsschicht eine Zwischenschicht aufgebracht ist, die den thermischen Ausdehnungskoeffizienten der Schicht und des Trägers aufeinander abstimmt.

Aus der EP-A2-0 112 509 ist eine Bestrahlungsmaske für Röntgenlithographie bekannt, bei der eine Verformung durch einen symmetrischen Schichtaufbau vermieden werden soll.

Der Erfindung liegt die Aufgabe zugrunde, einen Teilungsträger anzugeben, dessen Schichtaufbau so gewählt ist, daß auf den Grundkörper keine Spannungen ausgeübt werden, die zu einer Verbiegung des Grundkörpers führen.

Die Aufgabe wird durch die Merkmale des Anspruches 1 gelöst.

Die mit der Erfindung erzielten Vorteile bestehen insbesondere darin, daß der Grundkörper durch die darauf befindlichen Schichten nicht mechanisch deformiert wird. Ein weiterer Vorteil besteht darin, daß die Schichten auf einer Seite des Grundkörpers aufgebracht werden können und dadurch auf dem Grundkörper ein in sich spannungsfreies Schichtenpaket vorliegt, das eine hohe Haftfestigkeit aufweist und sich nicht durch Spannungen vom Grundkörper löst.

Vorteilhafte Ausbildungen der Erfindung entnimmt man den abhängigen Ansprüchen.

Ausführungsbeispiele der Erfindung werden anhand der Zeichnungen näher erläutert.

Es zeigen
- Figur 1: einen Teilungsträger mit einem Amplitudengitter;
- Figur 2: einen weiteren Teilungsträger mit einem Amplitudengitter;
- Figur 3: einen Teilungsträger mit einem Phasengitter;
- Figur 4: den Teilungsträger nach Figur 3 in Draufsicht;
- Figur 5: einen weiteren Teilungsträger mit einem Phasengitter und
- Figur 6: eine weitere Ausgestaltung des Teilungsträgers mit einem Phasengitter.

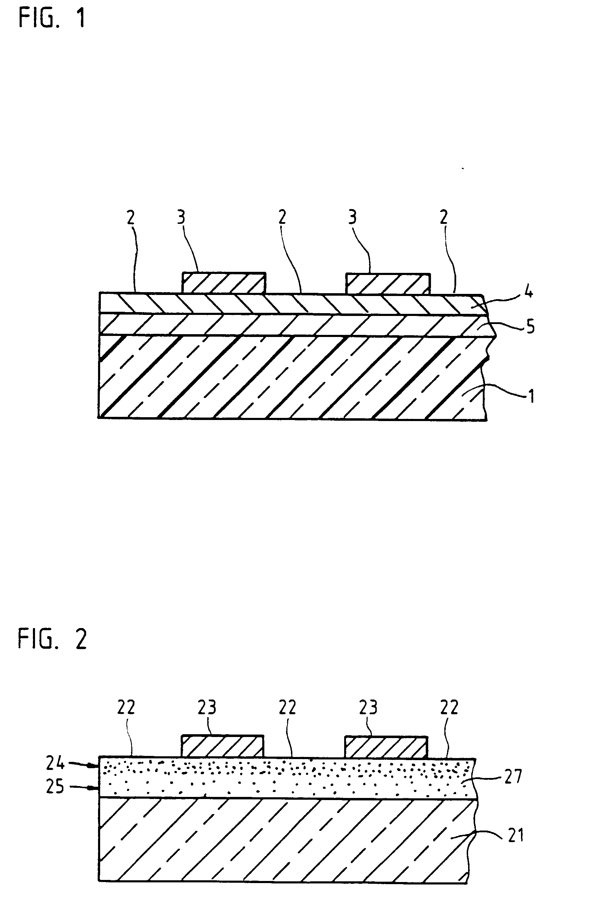

In den Figuren 1 bis 6 ist jeweils ein Teilungsträger dargestellt, der als Maßverkörperung in einem im Auflicht arbeitenden lichtelektrischen Längenoder Winkelmeßsystem eingesetzt wird. Auf einem aus Glas bestehenden Grundkörper 1 ist eine Teilung in Form von abwechselnd lichtreflektierenden Bereichen 2 und nicht reflektierenden Bereichen 3 vorgesehen. Die nicht reflektierenden, also absorbierenden Bereiche 3 sind streifenförmige Chromoxid-Abscheidungen. Die reflektierenden Bereiche 2 werden von einer durchgehenden reflektierenden Schicht 4 aus Titannitrid gebildet. Um Verspannungen zu vermeiden, ist dieser Schicht 4 eine Kompensationsschicht 5 aus Chrom zugeordnet. Beide durchgehenden Schichten 4, 5 sind aufeinanderfolgend auf einer Seite des Grundkörpers 1 angebracht. Diese Schichtenkombination ist besonders vorteilhaft, da die mit den absorbierenden Bereichen 3 in Kontakt stehende Titannitrid-Schicht 4 hochreflektierend und die darunter liegende Chrom-Schicht 5 mechanisch besonders widerstandsfähig ist. Die mechanischen Spannungen beider Schichten 4, 5 sind gegenläufig und heben sich dadurch auf. Das Gleichgewicht der Spannungen ist etwa bei folgenden Schichtdicken erreicht:

| | |
|---|---|
| Titannitrid (TiN) | 40nm |
| Chrom (Cr) | 50nm |

In Figur 2 ist ein weiterer Teilungsträger in Form eines Amplitudengitters dargestellt. Auf dem aus Glas bestehenden Grundkörper 21 sind ebenfalls abwechselnd reflektierende Bereiche 22 und absorbierende Bereiche 23 vorgesehen. Die absorbierenden Bereiche 23 sind wie bei Figur 1 streifenförmige Chromoxid-Abscheidungen bekannter Art. Die reflektierenden Bereiche 22 werden von einer Schicht 27 gebildet, die aus physikalisch-chemisch inhomogenen Schichtenbereichen 24, 25 besteht. Die Schichtenbereiche 24, 25 werden während des Abscheidens durch sich ändernden Reaktionsgasdruck erzielt.

Im gezeigten Beispiel wird auf die Oberfläche des Grundkörpers 21 Titan als erster Schichtenbereich 25 abgeschieden und während der Beschichtung der Reaktionsgasdruck erhöht, so daß sich ein zweiter Schichtenbereich 24 aus Titannitrid bildet. Die so erhaltenen Schichtenbereiche 24, 25 haben unterschiedliche physikalische Eigenschaften, so daß sich die Spannungen aufheben und die Schicht 27 im fertigen Zustand des Teilungsträgers keine Spannungen auf den Grundkörper 21 ausübt.

Die bisher beschriebenen Teilungen 2, 3; 22, 23 der Teilungsträger werden als Amplitudengitter bezeichnet, da sie die Amplitude, nicht aber die Phase des auftreffenden Lichtes unterschiedlich beeinflussen.

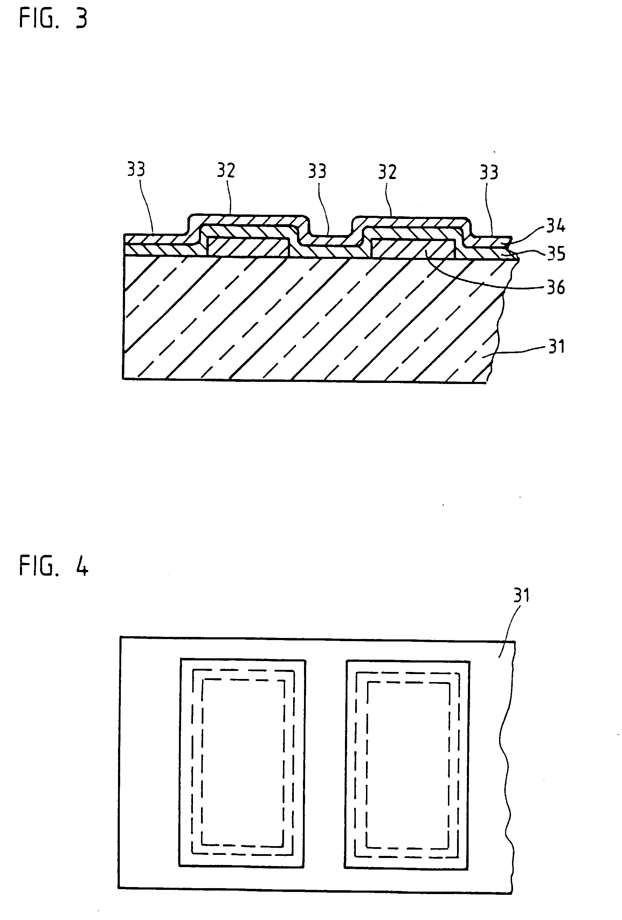

Bei den Teilungsträgern gemäß den Figuren 3 bis 6 sind Phasengitter dargestellt, bei denen eine Modulation der Phasenlage der Lichtwellen vorgenommen wird.

Der Teilungsträger der Figuren 3 und 4 weist einen Grundkörper 31 auf, auf dem mittels mehrerer Schichten 36, 35, 34 ein stufenförmiges Profil erzeugt wird. Auf dem Grundkörper 31 sind partiell voneinander beabstandete Stege 36 aus Chrom abgeschieden. Darauf befindet sich eine durchgehende Kompensationsschicht 35 aus Chrom und darauf wiederum eine durchgehende hochreflektierende Schicht 34 aus TiN. Die Oberfläche der Schicht 34 weist abwechselnd erhabene Bereiche 32 und abgestufte Bereiche 33 auf, welche die Teilung bilden. Die Kompensationsschicht 35 verhindert auch bei diesem Ausführungsbeispiel ein Verspannen des Grundkörpers 31 durch die Schicht 34.

In Figur 4 ist der Teilungsträger nach Figur 3 in Draufsicht dargestellt.

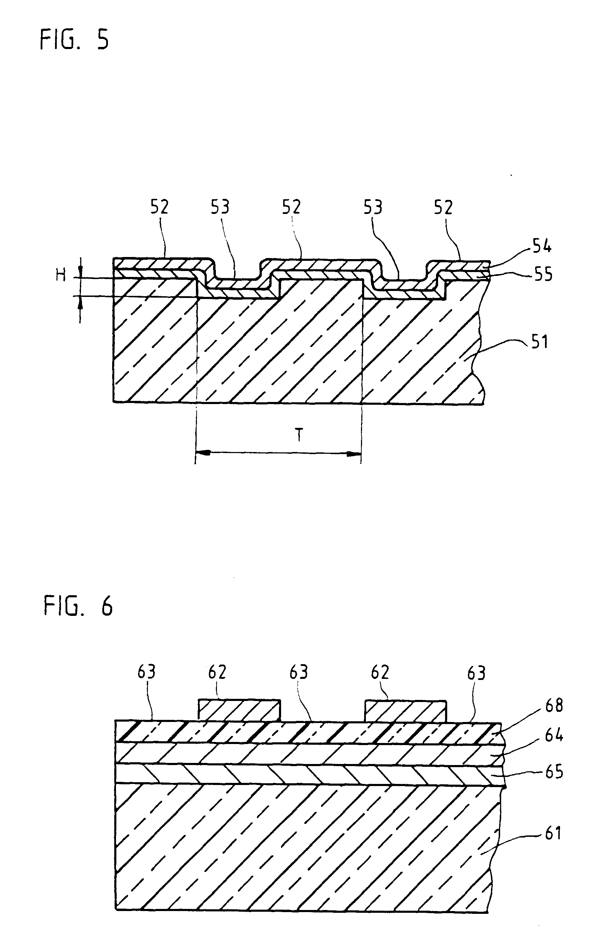

Beim Teilungsträger nach Figur 5 sind die gestuften Bereiche 52 und 53 durch stufenförmige Strukturierung des Grundkörpers 51 realisiert. Die Strukturierung des Grundkörpers 51, der bevorzugt aus Glas besteht, erfolgt durch HF-naßätzen oder durch reaktives Ionenätzen. Auf dem Grundkörper 51 ist eine durchgehende Kompensationsschicht 55 aus Chrom und darauf wiederum eine durchgehende reflektierende Schicht 54 aus TiN aufgebracht. Beide Schichten 54 und 55 ergänzen sich derart, daß sie im fertigen Zustand des Teilungsträgers nach außen keine mechanischen Spannungen ausüben.

An dieser Stelle soll kurz auf die Funktionsweise des Phasengitters mit den erhabenen Bereichen 52 und den abgestuften Bereichen 53 eingegangen werden. Reflektiert paralleles Licht an der Oberfläche der reflektierenden Schicht 54, dann haben die Teilbündel, welche an den Bereichen 53 reflektiert werden einen längeren Weg und somit eine Phasenverzögerung gegenüber den Teilbündeln, die an den erhabenen Reichen 52 reflektiert werden. Der Gangunterschied zwischen den Teilbündeln ist zweckmäßigerweise λ/2. Die reflektierenden Teilbündel interferieren miteinander. Bei Verschieben des Teilungsträgers gegenüber einer Abtasteinheit ändern sich die Phasenlagen der Lichtwellen in den verschiedenen Beugungsordnungen. Nach Interferenz der Lichtbündel erhält man somit in Abhängigkeit vom Verschiebeweg einen sinusförmigen Verlauf der Lichtintensität, die von Photoempfängern erfaßt wird und aus denen positionsabhängige Signale erzeugt werden.

Die Erfindung ist besonders vorteilhaft bei Teilungsträgern mit Phasengittern einzusetzen, da die Lichtausnutzung bzw. der Wirkungsgrad bei Phasengittern besonders groß ist.

Eine typische Dimensionierung des Teilungsträgers ist nachfolgend angegeben:
- Dicke der Chrom-Schicht 55: 50nm
- Dicke der TiN-Schicht 54: 40nm
- Stufenhöhe H: 220nm
- Teilungsperiode T: 8µm

Als letztes Ausführungsbeispiel ist in Figur 6 ein Teilungsträger dargestellt, bei dem auf einem Grundkörper 61 eine durchgehende Kompensationsschicht 65 aus Chrom und nachfolgend eine ebenfalls durchgehende reflektierende Schicht 64 aus TiN aufgebracht ist. Die Teilung wird gebildet, indem auf der reflektierenden Schicht 64 eine transparente Zwischenschicht 68 aus Magnesiumfluorid vorgesehen ist, auf der streifenförmige, voneinander beabstandete reflektierende Stege 62 aufgebracht sind. Die erhabenen Bereiche werden von den Stegen 62 gebildet und die abgestuften Bereiche 63 von den Oberflächenbereichen der reflektierenden Schicht 64, welche zwischen den Stegen 62 liegen. Das Schichtenpaket mit den Schichten 64, 65 verhindert, daß im fertigen Zustand des Teilungsträgers Spannungen auf den Grundkörper 61 einwirken.

Wesentlich ist bei allen Ausführungsformen, daß wenigstens zwei durchgehende Schichten 4, 5; 24, 25; 34, 35; 54, 55; 64, 65 auf einer Seite des Grundkörpers 1, 21, 31, 51, 61 vorgesehen sind, deren Spannungen sich gegenseitig aufheben. Dies kann erreicht werden, indem für die Schichten 4, 5; 24, 25; 34, 35; 54, 55; 64, 65 verschiedene Materialien mit unterschiedlichen physikalischen Eigenschaften verwendet werden. Die Optimierung kann zusätzlich durch die Wahl der geeigneten Schichtdicken erfolgen.

Die Erfindung kann auch besonders vorteilhaft bei Teilungsträgern für sogenannte Kreuzgitter-Meßsysteme gemäß der EP 0 482 224 A1 angewandt werden.

Der Grundkörper des Teilungsträgers ist vorteilhaft aus Glas, es sind aber auch andere Materialien, wie Kunststoff oder Metall einsetzbar.

## Patentansprüche

1. Teilungsträger für ein im Auflicht arbeitendes Längen- oder Winkelmeßsystem, bei dem auf einer Seite eines Grundkörpers (1, 21, 31, 51, 61) mehrere durchgehende Schichten (4, 5; 24, 25; 34, 35; 54, 55; 64, 65) vorhanden sind, dadurch gekennzeichnet, daß zumindest eine dieser Schichten eine durchgehende reflektierende Schicht (4, 24, 34, 54, 64) ist und zwischen dieser reflektierenden Schicht (4, 24, 34, 54, 64) und dem Grundkörper (1, 21, 31, 51, 61) eine durchgehende Kompensationsschicht (5, 25, 35, 55, 65) vorhanden ist, wobei die Schichten (4, 5; 24, 25; 34, 35; 54, 55; 64, 65) unterschiedliche physikalische Eigenschaften besitzen und das Schichtenmaterial und die Schichtendicken so bestimmt sind, daß in den Schichten (4, 5; 24, 25; 34, 35; 54, 55; 64, 65) hervorgerufene mechanische Spannungen kompensiert werden.

2. Teilungsträger nach Anspruch 1, dadurch gekennzeichnet, daß auf einer Oberfläche des Grundkörpers (1) die Kompensationsschicht (5), darauf die reflektierende Schicht (4) und darauf wiederum partiell voneinander beabstandete absorbierende Bereiche (3) vorhanden sind.

3. Teilungsträger nach Anspruch 1, dadurch gekennzeichnet, daß die Schichten (24, 25) aus einer physikalisch inhomogenen Schicht (27) bestehen, die keine Spannungen auf den Grundkörper (21) ausübt.

4. Teilungsträger nach Anspruch 3, dadurch gekennzeichnet, daß die inhomogene Schicht (27) zumindest einen Schichtenbereich (25) aus Titan und einen Schichtenbereich (24) aus Titannitrid aufweist.

5. Teilungsträger nach Anspruch 1, dadurch gekennzeichnet, daß die Teilung (32, 33; 52, 53; 62, 63) ein Phasengitter ist.

6. Teilungsträger nach Anspruch 5, dadurch gekennzeichnet, daß auf einer Oberfläche des Grundkörpers (31) voneinander beabstandete Stege (36) vorhanden sind, daß darauf die durchgehende Kompensationsschicht (35) und darauf die durchgehende reflektierende Schicht 834) aufgebracht ist.

7. Teilungsträger nach Anspruch 5, dadurch gekennzeichnet, daß der Grundkörper (51) stufig strukturiert ist, und daß darauf die durchgehende Kompensationsschicht (55) und darauf die durchgehende reflektierende Schicht (54) aufgebracht ist.

8. Teilungsträger nach Anspruch 5, dadurch gekennzeichnet, daß auf einer Oberfläche des Grundkörpers (61) die durchgehende Kompensationsschicht (65), darauf die durchgehende reflektierende Schicht (64), darauf eine transparente Schicht (68) und darauf einzelne voneinander beabstandete reflektierende Stege (62) aufgebracht sind.

9. Teilungsträger nach einem der Ansprüche 1, 2 oder 5 bis 8, dadurch gekennzeichnet, daß die reflektierende Schicht (4, 34, 54, 64) eine Titannitrid-Schicht ist und die Kompensationsschicht (5, 35, 55, 65) eine Chrom-Schicht ist.

## Claims

1. Support for a measuring scale for a length or angle measuring system operating in incident light, in which a plurality of continuous layers (4,5;24,25;34,35;54,55;64,65) are present on one side of a basic member (1,21,31,51,61), characterised in that at least one of these layers is a continuous reflective layer (4,24,34,54,64), and there is present between this reflective layer (4,24,34,54,64) and the basic member (1,21,31,51,61) a continuous compensating layer (5,25,35,55,65), the layers (4,5;24,25;34,35;54,55;64,65) having different physical properties and the layer material and the layer thicknesses being so determined that mechanical tensions caused in the layers (4,5;24,25;34,35;54,55;64,65) are compensated.

2. Support for a measuring scale according to claim 1, characterised in that there are present on a surface of the basic member (1) the compensating layer (5), thereupon the reflective layer (4) and again thereupon absorbent areas (3) which are partially spaced apart from one another.

3. Support for a measuring scale according to claim 1, characterised in that the layers (24,25) comprise a physically inhomogeneous layer (27) which exerts no tensions on the basic member (21).

4. Support for a measuring scale according to claim 3, characterised in that the inhomogeneous layer (27) has at least one layer area (25) of titanium and one layer area (24) of titanium nitride.

5. Support for a measuring scale according to claim 1, characterised in that the scale (32,33;52,53;62,63) is a phase grid.

6. Support for a measuring scale according to claim 5, characterised in that there are present on one surface of the basic member (31) webs (36) spaced apart from one another, in that the continuous compensation layer (35) is applied thereupon, and the continuous reflective layer (34) is in turn applied thereupon.

7. Support for a measuring scale according to claim 5, characterised in that the basic member (51) is stepped in configuration, the continuous compensation layer (35) being applied thereupon, and the continuous reflective layer (54) is applied thereupon.

8. Support for a measuring scale according to claim 5, characterised in that upon one surface of the basic member (61) there is applied the continuous compensating layer (65), thereupon the continuous reflective layer (64), thereupon a transparent layer (68), and thereupon individual reflective webs (62) spaced apart from each other.

9. Support for a measuring scale according to one of claims 1, 2 or 5 to 8, characterised in that the reflective layer (4,34,54,64) is a titanium nitride layer, and.the compensating layer (5,35,55,65) is a chromium layer;

## Revendications

1. Support de graduation pour un dispositif de mesure de longueurs ou d'angles travaillant par réflexion, dans lequel plusieurs couches (4, 5; 24, 25; 34, 35 ; 54, 55 ; 64, 65) continues sont appliquées sur une face d'un corps de base (1, 21, 31, 51, 61), caractérisé par le fait qu'au moins une de ces couches est une couche réfléchissante (4, 24, 34, 54, 64) continue et qu'une couche de compensation (5, 25, 35, 55, 65) continue est disposée entre cette couche réfléchissante (4, 24, 34, 54, 64) et le corps de base (1, 21, 31, 51, 61), les couches (4, 5; 24, 25; 34, 35; 54, 55; 64, 65) étant dotées de propriétés physiques différentes et le matériau et l'épaisseur des couches étant adaptés de telle sorte que des contraintes mécaniques induites dans les couches (4, 5; 24, 25; 34, 35; 54, 55; 64, 65) soient compensées.

2. Support de graduation selon la revendication 1, caractérisé par le fait que sur une surface du corps de base (1) sont appliquées la couche de compensation (5), puis sur celle-ci la couche réfléchissante (4) et sur cette dernière, partiellement, des zones (3) absorbantes qui sont espacées les unes des autres.

3. Support de graduation selon la revendication 1, caractérisé par le fait que les couches (24, 25) sont constituées d'une couche (27) physiquement non homogène qui n'engendre pas de contraintes au niveau du corps de base (21).

4. Support de graduation selon la revendication 3, caractérisé par le fait que la couche (27) non homogène comporte au moins une zone (25) en titane et une zone (24) en nitrure de titane.

5. Support de graduation selon la revendication 1, caractérisé par le fait que la graduation (32, 33 ; 52, 53 ; 62, 63) est un réseau de phase .

6. Support de graduation selon la revendication 5, caractérisé par le fait que des barrettes (36) espacées les unes des autres sont formées sur une surface du corps de base (31) et par le fait que sont appliquées sur lesdites barrettes la couche (35) de compensation continue puis, sur cette dernière, la couche réfléchissante (34) continue.

7. Support de graduation selon la revendication 5, caractérisé par le fait que le corps de base (51) est doté d'une structure en gradins et par le fait que sont appliquées sur cette structure la couche de compensation (55) continue et sur cette dernière la couche réfléchissante (54) continue.

8. Support de graduation selon la revendication 5, caractérisé par le fait que sur une surface du corps de base (61) sont appliquées la couche de compensation (65) continue, puis la couche réfléchissante (64) continue, puis une couche transparente (68) et sur cette dernière des barrettes (62) isolées réfléchissantes espacées les unes des autres.

9. Support de graduation selon une des revendications 1, 2 ou 5 à 8, caractérisé par le fait que la couche réfléchissante (4, 34, 54, 64) est une couche de nitrure de titane et la couche de compensation (5, 35, 55, 65) une couche de chrome.
